## Europäisches Patentamt

(19) **European Patent Office**

**Office européen des brevets**

(11) Veröffentlichungsnummer: **0 090 171**
A2

(12) # EUROPÄISCHE PATENTANMELDUNG

(21) Anmeldenummer: **83101605.0**

(22) Anmeldetag: **19.02.83**

(51) Int. Cl.³: **B 27 F 5/06**, B 23 Q 9/02

(30) Priorität: 25.03.82 DE 3210898
09.06.82 DE 3221789

(43) Veröffentlichungstag der Anmeldung: **05.10.83**
**Patentblatt 83/40**

(84) Benannte Vertragsstaaten: **AT CH FR LI**

(71) Anmelder: **Mafell-Maschinenfabrik Rudolf Mey GmbH & Co. KG, Postfach 1180, D-7238 Oberndorf a.N. Aistaig (DE)**

(72) Erfinder: **Heinzelmann, Werner, Felbenstrasse 3, D-7238 Oberndorf (DE)**
Erfinder: **Schwarz, Josef, Römerweg 25, D-7238 Oberndorf-Hochmössingen (DE)**

(74) Vertreter: **Schmid, Berthold et al, Patentanwälte Dipl.-Ing. B. Schmid Dr. Ing. G. Birn Falbenhennenstrasse 17, D-7000 Stuttgart 1 (DE)**

(54) **Vorrichtung zum Einbringen von Schlitzen, insbesondere an Holz, Holzverbundwerkstoffen u. dgl.**

(57) Die Vorrichtung zum Einbringen von Schlitzen (18) an Werkstücken (1), insbesondere Holzverbundwerkstoffen, Balken, Holzbindern u.dgl., wird mit Hilfe einer Halterung (2) an das Werkstück (1) angeklemmt. Das Werkzeug, vorzugsweise eine Fräskette mit einem schwertartigen Werkzeugträger (14), wird mittels einer Längsführung (20) präzise zugestellt, wobei die Länge dieser Führung vergleichsweise tiefe Schlitze (18) ermöglicht. Die Schlitzbreite bestimmt sich nach der Breite des Werkzeugs bzw. des arbeitenden Trumms der Fräskette. Sie kann jedoch verdoppelt oder vervielfacht werden, indem man die Motor-Werkzeug-Einheit (2) wahlweise in eines von mehreren, vorzugsweise zwei Aufnahmebohrungenpaare (z.B. 23) einsteckt. Die Führungsbuchsen (z.B. 32), die vorzugsweise mit doppelten Kugelführungen (30, 31) ausgestattet sind, werden in geeigneter Weise in den Aufnahmebohrungen lösbar gehalten.

Außer der Schlitzverbreiterung durch Umsetzen ist auch eine Vergrößerung der Höhe des Schlitzes (18) durch Hochstellen oder Absenken des schwertartigen Werkzeugträgers (14) bzw. eines Teils der Motor-Werkzeug-Einheit (27) gegenüber dem anderen, die Führungsstangen (z.B. 21) tragenden Teil, möglich. Diese Einstellung erfolgt stufenlos mit Hilfe der Klemmführung sowie der Querführung. Eine Abstützung des Werkzeugträgers (14) im Bereich der Halterung (2) über eine Kulissenführung (35) gewährleistet eine saubere, exakte Schlitzausbildung.

0090171

Mafell Maschinenfabrik

Rudolf Mey GmbH & Co KG


7238 Oberndorf a.N. (Aistaig)



Vorrichtung zum Einbringen von Schlitzen,

insbesondere an Holz, Holzverbundwerkstoffen u. dgl.



Die Erfindung bezieht sich auf eine Vorrichtung zum Einbringen
von Schlitzen an Werkstücken, insbesondere an Holz, Holzverbundwerkstoffen u. dgl., mittels eines antreibbaren Werkzeugs.
An geleimten Holzbindern, Holzträgern, balkenartigen Elementen
des Skeletholzbaues u. dgl. müssen relativ tiefe Schlitze
meist stirnseitig eingearbeitet werden, die Aufnahmen für
Haken, Stahlplatten u. dgl. bilden. Beispielsweise werden in einen solchen Schlitz mit einem Fundament verbundene Stahllaschen eingelassen und quer verschraubt, um einen senkrecht
stehenden Leimbinder od. dgl. sicher zu halten.

Derartige Schlitze werden bislang mit Kettensägen, Handkreissägen oder auch von Hand bearbeitet, wobei die Schlitze üblicherweise ganz durchlaufen. Zur Verblendung einer eingelassenen
Stahlplatte muß dann die Schnittfuge durch Holzeinsätze wieder
abgedeckt werden.

Diese Verfahrensweise ist relativ aufwendig und bei Arbeitstiefen um 600 mm nicht immer sehr genau. Außerdem ist das nachträgliche Abdecken der Enden eines durchgehenden Schlitzes ein
zusätzlicher, aufwendiger und teurer Arbeitsgang.

Die Aufgabe der Erfindung besteht infolgedessen darin, eine Vorrichtung der eingangs genannten Art zu schaffen, mit deren Hilfe
man auch vergleichsweise tiefe sowie gegebenenfalls auch breite
Schlitze in die Werkstücke schnell und genau einbringen kann, wobei insbesondere Wert darauf gelegt wird, daß die Schlitze nicht
durchlaufen müssen.

Zur Lösung dieser Aufgabe wird erfindungsgemäß vorgeschlagen,
daß die Vorrichtung gemäß dem Oberbegriff des Anspruchs 1 durch
eine am Werkstück befestigbare Halterung gekennzeichnet ist, an
welcher das Werkzeug ein- und zustellbar angebracht ist. Die
Halterung ist so auszubilden und zu dimensionieren, daß sie an

- 3 -                        0090171

den für diese Bearbeitung vorgesehenen Werkstücken rasch und sicher befestigt werden kann. Ihr Einstellbereich ist so auszulegen, daß ein Anbringen an den üblicherweise vorkommenden Werkstückgrößen ohne Schwierigkeiten möglich ist. Außerdem sollten das Ausrichten gegenüber dem Werkstück und das Einstellen des Werkzeugs schnell und sicher durchzuführen sein. Schließlich ist darauf zu achten, daß das Zustellen des Werkzeugs in einfacher und dem Material entsprechender Weise rasch und problemlos durchzuführen ist.

Bei einer bevorzugten Ausführungsform der Erfindung ist die Halterung in der Art einer Schraubzwinge ausgebildet und das Werkzeug mit seinem Antrieb zumindest längsverschiebbar daran gelagert. Über diese Längsverschiebung wird das Werkzeug gegen das Werkstück hin zugestellt, und die Länge dieser Führung bestimmt die maximale Schlitztiefe. Die Schlitzbreite richtet sich in erster Linie nach der Breite des Werkzeugs. In Weiterbildung der Erfindung ist das Werkzeug jedoch gegenüber der Halterung quer zur Längsführung höheneinstellbar, so daß Schlitzbreiten erstellt werden können, welche die Breite des Werkzeugs übertreffen. Falls ein Querverschieben des laufenden Werkzeugs nicht möglich ist, wird ein breiterer Schlitz in zwei oder mehreren Arbeitsgängen erstellt.

Eine weitere Ausgestaltung der Erfindung ist dadurch gekennzeichnet, daß zur längsverschiebbaren Lagerung der Motor-

0090171

Werkzeug-Einheit an letzterer wenigstens eine, vorzugsweise
aber zwei seitlich versetzte Führungsstangen befestigt sind,
die mit je einer Führungsbuchse zusammen eine Längsführungsvorrichtung bilden. Eine solche Längsführung läßt sich äußerst
stabil ausführen und sie gewährleistet bei genügend langer und
präziser Ausbildung der Führungsbuchsen ein sehr exaktes Einbringen des Schlitzes im Werkstück auch bei relativ großer
Schlitztiefe. Dabei ist es im Hinblick auf die erwähnte Genauigkeit, aber auch ein müheloses Zustellen und Zurückziehen des
Werkzeugs von besonderem Vorteil, daß jede Führungsstange in
einer vorzugsweise doppelten Kugelführung gelagert ist.

Eine andere Variante der Erfindung sieht vor, daß die Zahl der
Aufnahmebohrungen der Halterung für die Führungsbuchsen größer
ist als die Zahl der Führungsstangen, sie insbesondere doppelt
so groß ist. Dadurch erhält man die Möglichkeit, jede Führungsstange wahlweise in zumindest eine von zwei Aufnahmebohrungen
aus- und einzustecken, um so die Motor-Werkzeug-Einheit bei
gleichbleibender Stellung der Halterung am Werkzeug dem Werkstück in wenigstens zwei seitlich versetzten Stellungen zuzuordnen. In jeder dieser Stellungen läßt sich ein Schlitz erstellen, wobei es je nach Konstruktion des Werkzeugs möglich
ist, diese derart ineinander übergehen zu lassen, daß beispielsweise ein etwa doppelt oder dreifach so breiter Schlitz
entsteht, als er mit dem Werkzeug an sich gefertigt werden
kann.

In diesem Zusammenhang sieht eine Weiterbildung der Erfindung vor, daß das Werkzeug als Fräskette od. dgl. ausgebildet und um einen schwertartigen Werkzeugträger geführt ist, wobei das freie Ende des Werkzeugträgers mit dem Werkzeug geringfügig breiter ist als der seitliche Abstand zweier benachbarter Aufnahmebohrungen zweier Aufnahmebohrungenpaare, jedoch wesentlich kleiner als der Seitenabstand der beiden Aufnahmebohrungen ein und desselben Aufnahmebohrungenpaares. Dies ermöglicht nach einmaligem Umsetzen der Motor-Werkzeug-Einheit quasi eine Verdoppelung der Schlitzbreite. Bei drei Aufnahmebohrungenpaaren erhält man demnach etwa einen dreifach breiten Schlitz usw.

Eine andere Ausführungsform der Erfindung kennzeichnet sich dadurch, daß die beiden Führungsbuchsen durch einen Querträger verbunden sind und an diesem der Werkzeugträger verschiebbar abgestützt ist. Auf diese Weise wird ein "Verlaufen" des Schlitzes auch bei großer Schlitztiefe sicher vermieden.

Eine weitere Ausgestaltung der Erfindung ist gekennzeichnet durch eine Abstützung des Werkzeugträgers am Querträger mittels einer Kulissenführung, wobei sich in Längsrichtung des Werkzeugträgers ein Kulissenschlitz erstreckt und der Kulissenstein od. dgl. den Kulissenschlitz senkrecht zu dessen Längsachse durchsetzt und mit seitlichen Ansätzen beidseits untergreift. Der Kulissenschlitz erstreckt sich zweckmäßigerweise in Richtung der Längsmittelachse des schwertartigen Werkzeugträgers.

Seine Länge ist mindestens gleich der Verschiebelänge der beiden Führungsstangen der Längsführung zu wählen.

Eine bevorzugte Variante der Erfindung ist dadurch gekennzeichnet, daß der Kulissenstein od. dgl. an einem bolzenartigen Stützglied gehalten oder angeformt ist, das eine Klemmführung des Querträgers verschieb- und feststellbar durchsetzt. Dadurch kann man die Stützvorrichtung für den schwertartigen Werkzeugträger zugleich auch für dessen Ausrichtung gegenüber dem Werkstück benutzen. In diesem Zusammenhang steht eine weitere Ausbildung der Erfindung, welche sich dadurch kennzeichnet, daß die Motor-Werkzeug-Einheit an einer Querführung verschieb- und feststellbar gehalten ist, die sich parallel zur Klemmführung des Querträgers erstreckt und an der die von der Halterung abgewandten Enden der Führungsstangen befestigt sind. Damit wird gewissermaßen das hintere Ende des Werkzeugträgers ausgerichtet und in der Höhe eingestellt, während mit der anderen Vorrichtung der Werkzeugträger in seinem vorderen Bereich gegenüber dem Werkstück ausgerichtet wird. Außerdem kann man, wie bereits angedeutet, mit Hilfe dieser beiden Höheneinstellvorrichtungen Schlitze größerer Breite als die Werkzeugbreite erstellen, indem man nach dem Einbringen eines ersten Schlitzes das Werkzeug parallel zu sich selbst verstellt und dadurch die Schlitzverbreiterung herbeiführt. Eine besonders vorteilhafte Weiterbildung ist gekennzeichnet durch wenigstens ein einstellbares Anschlagelement an der Querführung für die Motor-Werkzeug-Einheit, das im Zusammenwirken mit einem Festanschlag der Querführung ein Verschieben der Werkzeug-Motor-Einheit zum Zweck der Schlitzverbreiterung innerhalb vorgegebener Grenzen ermöglicht.

Eine weitere Verbesserung der Vorrichtung, durch welche insbesondere die verbreiterten Schlitze mit noch höherer Präzision hergestellt werden können, ergibt sich aus Anspruch 13. Wenn der Schlitz in das volle Material eingebracht werden soll, so erfolgt das zunächst ohne den oder die Abstandshalter. Erst beim gegebenenfalls erforderlichen nachfolgenden Verbreitern dieses Schlitzes bringt man den oder die Abstandshalter an der Halterung, dem Träger, oder einer Führung für das Werkzeug an und er bzw. sie gleiten dann entlang der einen Schlitzwandung, so daß der Werkzeugträger od. dgl. sicher parallel zu sich selbst verschoben werden kann und dadurch ein "Verlaufen" d.h. seitliches Abdrücken quer zur Ebene des Werkzeugträgers od. dgl. vermieden werden. Dadurch lassen sich "verbreiterte Schlitze" hoher Genauigkeit herstellen. Die Höhe dieses Abstandshalters bzw. seine wirksame Höhe (bei einem höheneinstellbaren Abstandshalter) richtet sich nach dem Maß, um welches der zunächst ohne Abstandshalter eingebrachte Schlitz verbreitert werden soll. Wenn man auf eine Höheneinstellbarkeit des Abstandshalters verzichtet, so ist lediglich eine Verbreiterung um das Maß möglich, um welches der Abstandshalter über die Schneid- oder Zerspanungsebene des Werkzeugs übersteht.

In diesem Falle ist es dann zweckmäßig, entweder den Abstandshalter gegen einen höheren oder niedereren zu ersetzen, falls man
eine größere oder geringere Schlitzverbreiterung wünscht. Gegebenenfalls kann man den Abstandshalter auch in Verbindung mit Unterlagsscheiben od. dgl. Elementen verwenden, um dadurch eine
stufenweise Schlitzverbreiterung exakt vornehmen zu können.

Eine Weiterbildung der Erfindung sieht vor, daß jeder Abstandshalter steckbar mit dem Werkzeugträger verbunden und der Werkzeugträger zumindest zwei wahlweise benutzbare Einsteckbohrungen
für einen Einsteckbolzen des Abstandshalters aufweist. Wenn die
Einsteckbohrungen weit genug auseinander liegen, so kann man
gleichzeitig auch zwei Abstandshalter einsetzen. Im anderen Falle
ist das wahlweise Einstecken eines Abstandshalter in eine von
zwei oder mehreren Einsteckbohrungen möglich, um die Querabstützung in der jeweils günstigsten Weise vornehmen zu können.

Eine andere Ausgestaltung der Erfindung sieht vor, daß die Einsteckbohrungen für den oder die Abstandshalter in Längsrichtung
des schwertartigen Werkzeugträgers versetzt angeordnet sind, sich
insbes. etwa auf dessen Längsmittelachse befinden. Der Abstand
dieser Bohrungen kann beispielsweise 1 bis 3 cm betragen. Eine
weitere Ausbildung der Erfindung sieht vor, daß mindestens 3 die
Ecken eines Dreiecks markierende Einsteckbohrungen für den oder
die Abstandshalter am Werkzeugträger angebracht sind. Man erreicht dadurch eine Dreipunktabstützung, die ein Kippen sowohl um die Längs- als auch Querachse des schwertartigen Werkzeugträgers sicher verhindert. Dabei ist natürlich unterstellt, daß in drei der vorhandenen Einsteckbohrungen symmetrisch zur Längsachse des Werkzeugträgers je ein Abstandshalter eingesteckt ist. Einer befindet sich dann zweckmäßigerweise etwa auf der Längsmittelachse, während die beiden anderen dem vor- und dem zurücklaufenden Trumm des umlaufenden Werkzeugs mit etwa gleichem Abstand zugeordnet sind. Entsprechendes gilt für ein anders ausgebildetes Werkzeug.

Eine weitere Variante der Erfindung kennzeichnet sich dadurch, daß der Abstandshalter eine pilzförmige Gestalt besitzt, er also an seinem abstützenden Ende ballig oder in der Art einer Kugelkalotte geformt ist. Ein Gleitwiderstand wird dadurch gering gehalten.

Eine bevorzugte Ausführungsform einer Vorrichtung dieser Art mit einem schwertartigen Werkzeugträger für eine Fräskette od. dgl. kennzeichnet sich dadurch, daß die vordere Querkante des Werkzeugträgers geneigt zur Längsachse des Letzteren verläuft und damit insbes. einen Winkel von ca. 60° bis 80° einschließt. Entlang dieser vorderen Querkante läuft das schneidende Trumm der Fräskette od. dgl. Je nach Ausbildung des Kopfendes, d.h. Führung dieses schneidenden Trumms der Fräskette od. dgl., treten am Werkzeugträger Reaktionskräfte in Quer- und/oder Längsrichtung auf. Aufgrund dieses schrägen Verlaufs erzielt man eine leichte Einzugskraft ohne Neigung zum zeitlichen Ausweichen des Werkzeugträgers.

Dem seitlichen Ausweichen des Werkzeugträgers innerhalb der Werkzeugträgerebene kann man dadurch in vorteilhafter Weise zusätzlich entgegenwirken, daß man bei einer derartigen Vorrichtung mit einem schwertartigen Werkzeugträger für eine Fräskette od. dgl. im Bereich des freien Endes des Werkzeugträgers wenigstens ein querabstehendes, sich in dessen Vorschubrichtung erstreckendes messerartiges Führungsglied anbringt. Das oder die Führungsglieder stehen nur ganz minimal über den Arbeits- oder Schneidbereich über und sie graben sich infolgedessen geringfügig in das Material, beispielsweise Holz, ein. Dadurch erreicht man diese zusätzliche, das Querausweichen unterbindende Längsführung des Werkzeugträgers. In besonders bevorzugter Weise ist mindestens je ein nach entgegengesetzten querabstehendes messerartiges Führungsglieds des Werkzeugträgers vorgesehen. Man erreicht dadurch eine abstützende Führung sowohl nach oben als auch nach unten hin.

Eine weitere Ausgestaltung der Erfindung ist gekennzeichnet durch ein mittiges, nach der einen Seite abstehendes und zwei dazu in Verschieberichtung des Werkzeugträgers versetzte, beidseits der Längsmittelachse angeordnete, nach der anderen Seite abstehende messerartige Führungsglieder. Dies ergibt eine dreieckartige Anordnung dieser Führungsglieder und damit eine besonders präzise ergänzende Längsführung mit entsprechend breiter Abstützbasis. Zweckmäßigerweise ist das mittlere vorauseilend, d.h. die beiden seitlichen liegen in Vorschubrichtung des Werkzeugträgers gesehen weiter hinten.

Gemäß einer besonders bevorzugten Ausführungsform der Erfindung
wird vorgeschlagen, daß jedes messerartige Führungsglied in der
Art eines Schneidrades ausgebildet ist, dessen Achse sich senkrecht zur Vorschubrichtung des Werkzeugträgers in dessen Ebene
erstreckt.

In der Zeichnung ist ein Ausführungsbeispiel der Erfindung dargestellt. Es zeigen:

Figur    1    eine Seitenansicht der Vorrichtung, teilweise
              in vertikaler Richtung geschnitten, bei
              abgebrochener Darstellung,

Figur    2    ebenfalls in abgebrochener Darstellung
              eine Draufsicht auf die Vorrichtung
              der Fig. 1,

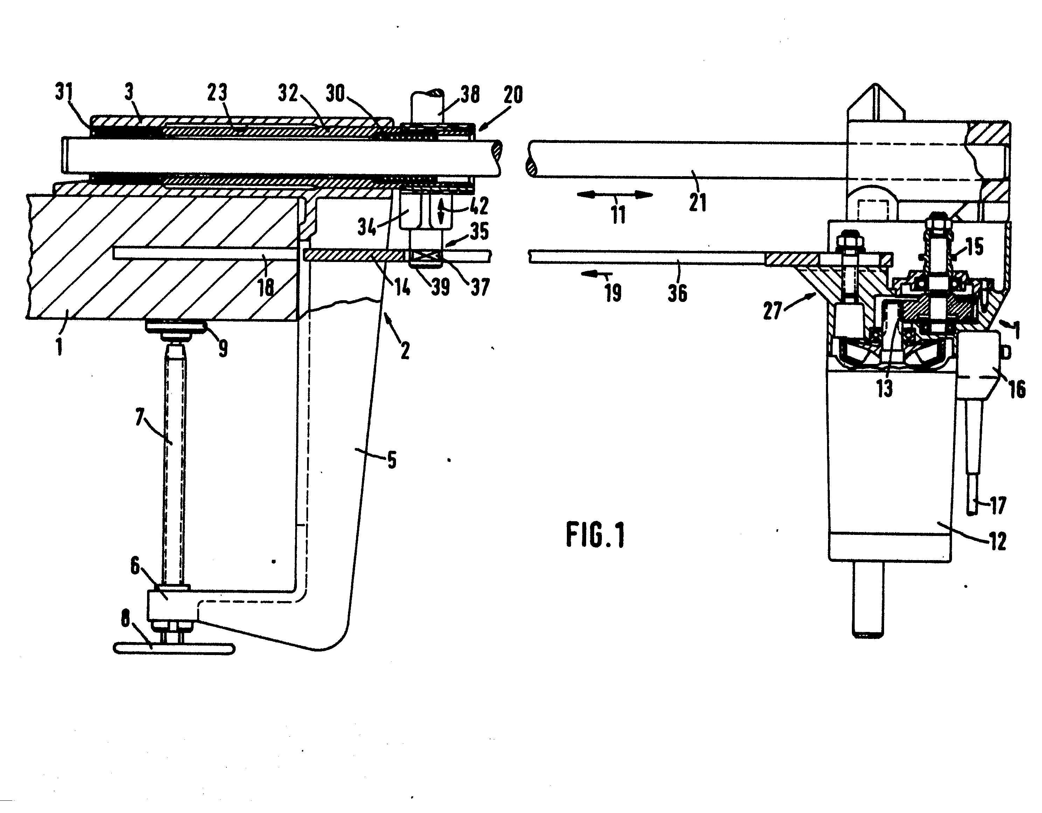

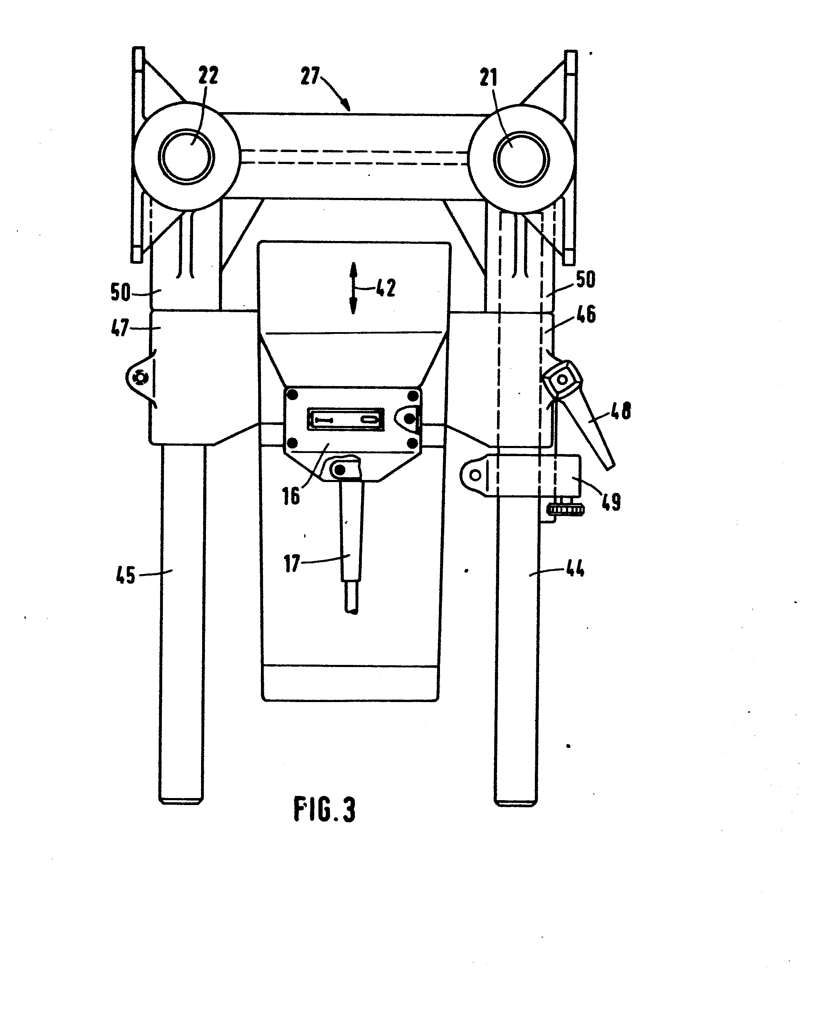

Figur    3    eine Ansicht der Vorrichtung in Pfeilrichtung A der Fig. 1,

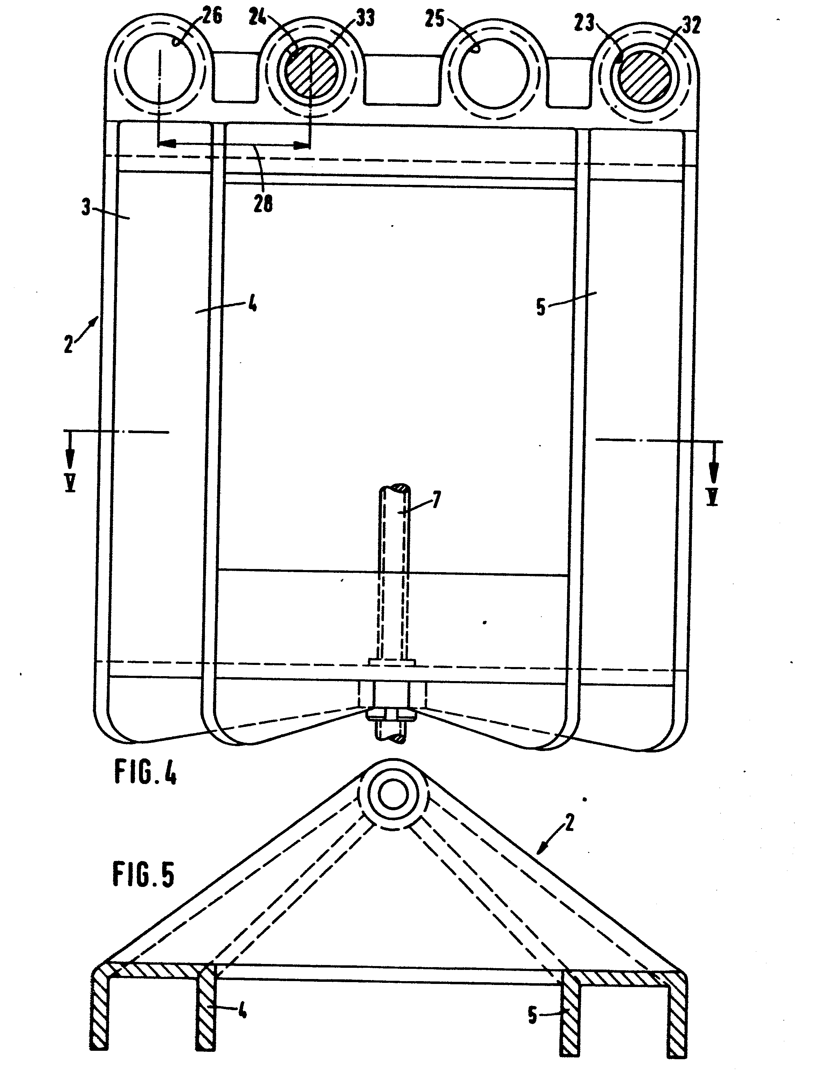

Figur    4    einen Schnitt gemäß der Linie IV-IV
              der Fig. 2,

Figur    5    einen Schnitt gemäß der Linie V-V der
              Fig. 4.

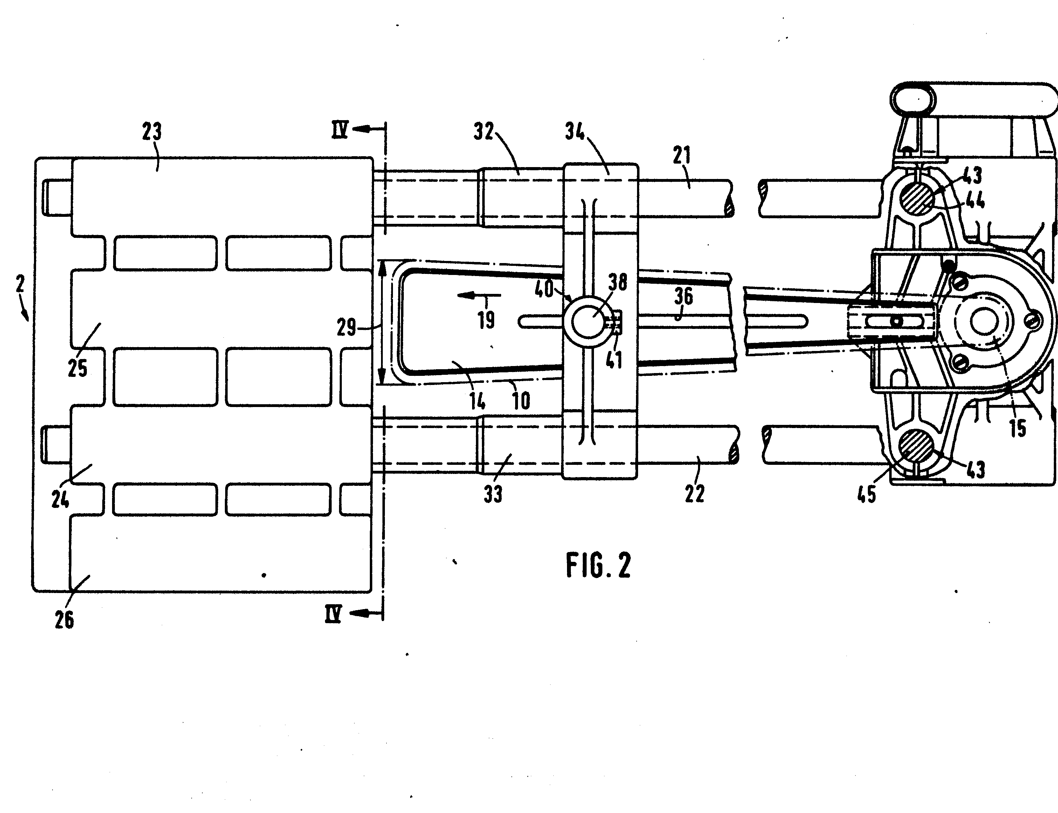

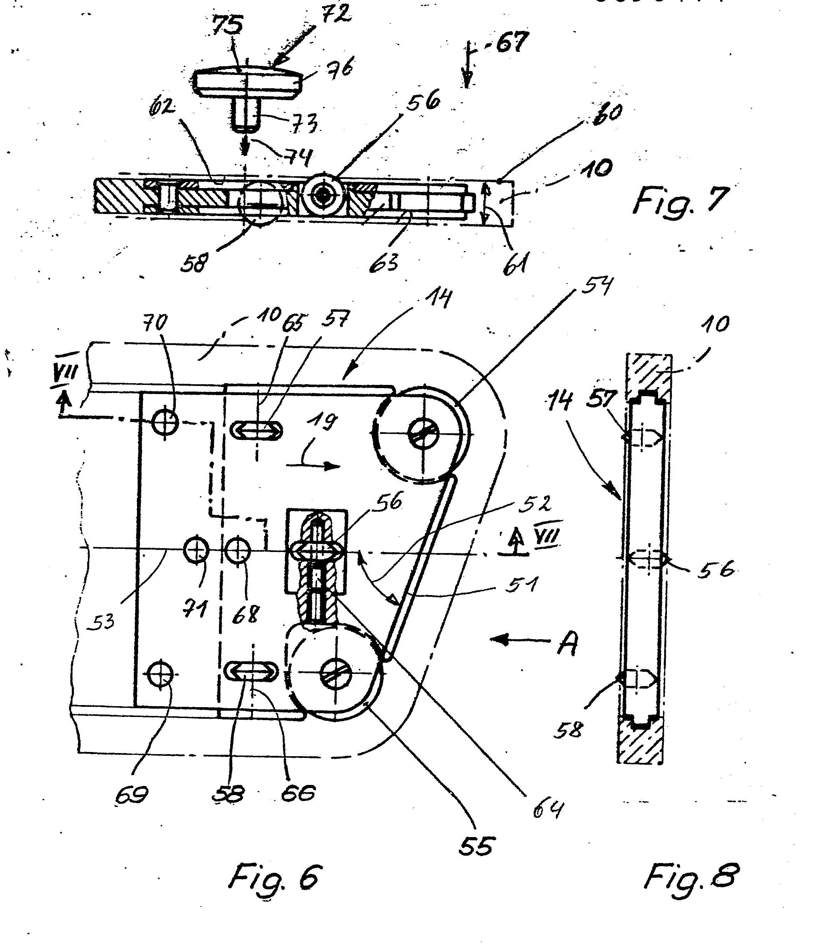

Fig. 6 in etwas vergrößerter Darstellung einen Ausschnitt aus Fig. 2, teilweise geschnitten.

Fig. 7 einen Schnitt gemäß der Linie VII-VII der Fig. 6,

Fig. 8 eine Ansicht der Fig. 6 in Pfeilrichtung A.

Am Werkstück 1 wird die Vorrichtung mittels der in der Art einer Schraubzwinge ausgebildeten Halterung 1 lösbar befestigt. Ein plattenartiger Grundkörper 3 liegt beispielsweise auf der Oberfläche des Werkstücks 1 auf, während zwei winkelförmige Tragarme 4 und 5 ein Auge 6 tragen, in dem eine Schraubspindel 7 mit einem Handrad 8 od. dgl. und einem Anpreßteller 9 verschraubbar ist. Zwischen letzterem und dem Grundkörper 3 wird das Werkstück 1 eingespannt.

An der Halterung 2 ist das als Fräskette ausgebildete Werkzeug 10 in Richtung des Doppelpfeils 11 verschieb- und einstellbar gelagert. Das Werkzeug 10 ist in Fig. 2 symbolisch durch eine strichpunktierte Linie dargestellt und von bekannter Bauart. Es wird mittels eines Motors 12 unter Zwischenschaltung eines Getriebes 13 angetrieben und um einen schwertartigen Werkzeugträger 14 sowie ein Ritzel 15 geführt. Ein elektrischer Schalter ist mit 16 und ein teilweise gezeichnetes elektrisches Anschlußkabel mit 17 bezeichnet.

Das Werkzeug dient zum Erstellen relativ tiefer Schlitze 18 im Werkstück 1. Hierzu muß das Werkzeug 10 nach dem Ausrichten in Pfeilrichtung 19 zugestellt werden. Dies geschieht mit Hilfe einer Längsführung 20, die im wesentlichen aus den beiden seitlich zueinander versetzten parallelen Führungsstangen 21, 22 sowie Führungsbuchsen 32, 33 des Grundkörpers 3 besteht. Gemäß einer besonderen Ausgestaltung der Erfindung ist jedoch am Grundkörper 3 nicht nur ein aus den Aufnahmebohrungen 23 und 24 bestehendes Aufnahmebohrungenpaar für die Führungsbuchsen vorhanden, sondern wenigstens zwei solcher Aufnahmebohrungenpaare. Die Aufnahmebohrungen des zweiten Aufnahmebohrungenpaares sind mit 25 und 26 bezeichnet. Demnach kann man die Führungsbuchsen mit den Führungsstangen 21 und 22, die an der Motor-Werkzeug-Einheit 27 befestigt sind, wahlweise in die Aufnahmebohrungen 23, 24 oder in die Aufnahmebohrungen 25, 26 einstecken. Da der seitliche Abstand 28 der Aufnahmebohrungen geringfügig kleiner ist als die Breite 29 des Werkzeugs 10 bzw. des arbeitenden Teils des Werkzeugs, läßt sich durch einmaliges Umsetzen der Motor-Werkzeug-Einheit 27 nahtlos eine Schlitzverbreiterung erreichen, wobei der Gesamtschlitz nahezu die doppelte Breite erreicht als der Einzelschlitz. Um eine leichtgängige Zustellung der Motor-Werkzeug-Einheit und auch eine präzise Erstellung des Schlitzes 18 zu gewährleisten, sind die Führungsstangen 21, 22 jeweils in doppelten Kugelführungen 30, 31 der Führungsbuchsen 32, 33 gelagert.

Die beiden Führungsbuchsen 32, 33 sind mittels eines Querträgers 34 verbunden, an dem der Werkzeugträger 14 im Sinne des Doppelpfeils 11 verschiebbar abgestützt ist. Dies geschieht mittels einer Kulissenführung 35, die aus einem Kulissenschlitz 36 des schwertartigen Werkzeugträgers 14 sowie einem Kulissenstein 37 besteht. Der Kulissenschlitz 36 ist in der Längsmittelachse des schwertartigen Werkzeugträgers 14 angebracht, und seine Länge entspricht etwa der maximalen Verschiebestrecke der Motor-Werkzeug-Einheit 27. Der Kulissenstein 37 ist am freien, in Fig. 1 unteren Ende eines bolzenartigen Stützglieds 38 angebracht, insbesondere angeformt, und er untergreift mit seitlichen Ansätzen 39 den Kulissenschlitz 36 beidseits. Die Längsachse des Stützglieds 38 verläuft, wie die Zeichnung zeigt, senkrecht zur Längsachse des Kulissenschlitzes 36 bzw. der Führungsstangen 21 und 22. Das bolzenartige Stützglied 38 durchsetzt eine Klemmführung 40 mit einer Feststellschraube 41. Mit Hilfe dieser Vorrichtung läßt sich das halterungsseitige Ende des schwertartigen Werkzeugträgers 14 mit dem dieses umschlingenden Trumm der Fräskette bzw. des Werkzeugs 10 im Sinne des Doppelpfeils 42 ein- und feststellen. Darüber hinaus ist die Motor-Werkzeug-Einheit 27 an einer Querführung 43 verschieb- und feststellbar gehalten. Sie besteht im wesentlichen aus den Führungsbolzen 44 und 45, welche Klemmhülsen 46 und 47 in vertikaler Richtung durchsetzen, d.h. die Achsen der Führungsbolzen 44 und 45 laufen parallel zur Achse des Stützglieds 38. Das Festklemmen und Lösen des in Fig. 1 unteren Teils der
Motor-Werkzeug-Einheit 27 erfolgt mit Hilfe von jeweils einem
Klemmhebel 48. Mit Hilfe der Klemmführung 40 sowie der Querführung 43 läßt sich der schwertartige Werkzeugträger 14 mit dem
Werkzeug 10 gegenüber der Längsführung bzw. den Führungsstangen
21 und 22 im Sinne des Doppelpfeils 42 absenken und anheben.
Auf diese Weise kann man Schlitze in größerer Höhe erstellen,
als dies mit dem Werkzeug bei nicht verstellbarer Ausführung
möglich ist. Die Schlitzhöhe kann selbstverständlich nicht nur
verdoppelt werden, vielmehr sind drei- und mehrfach hohe
Schlitze mit ein und demselben Werkzeug möglich. Da die Querverstellung durch Umsetzen der Motor-Werkzeug-Einheit 27 an der
Halterung 2 auch noch eine Schlitzverbreiterung gestattet, kann
man mit dem relativ schlanken Werkzeug Schlitze von stattlicher
Größe in die Werkstücke 1 einbringen, und zwar mit wesentlich
größerer Präzision, als dies bislang möglich war. Zu erwähnen
ist noch ein einstellbares Anschlagelement 49 an jedem Führungsbolzen 44, 45, wobei Fig. 3 lediglich eines davon zeigt.
Dieses und die Muffen 50 des oberen Teils der Motor-Werkzeug-
Einheit 27 begrenzen den Verschiebeweg im Sinne des Doppelpfeils 42.

Die vordere Querkante 51 des schwertartigen Werkzeugträgers 14
verläuft geneigt zur Längsachse 53 des Werkzeugträgers und damit
auch zur Vorschubrichtung des Letzteren, wobei diese Längsachse und die vordere Querkante einen Winkel 52 von ca. 60° bis 80°,
insbesondere von etwa 70°, einschließen. Damit eilt die eine vordere Umlenkrolle 54 der anderen vorderen Umlenkrolle 55 für die
Fräskette 10 od. dgl. voraus. Man erreicht dadurch eine leichte
Einzugskraft entgegen der Vorschubrichtung 19, ohne eine Neigung
zu seitlichem Ausweichen quer dazu.

Demselben Zwecke dienen messerartige Führungsglieder 56, 57, 58.
Der Arbeits- oder Schneidbereich 60 des als Fräskette ausgebildeten Werkzeugs 10 ist in den Figuren 6, 7 und 8 mit strichpunktierten Linien eingezeichnet. In Fig. 7 ist durch den Doppelpfeil
zugleich auch die Höhe 61 des mit der Fräskette 10 zu erstellenden Schlitzes angegeben. Sie kann in der vorstehend beschriebenen
Weise vergrößert werden. Das in Vorschubrichtung 19 des Werkzeugträgers 10 vorne liegende messerartige Führungsglied 56 steht wie
Fig. 7 der Zeichnung zeigt, nach der einen Seite hin über den
Werkzeugträger 14 und auch den Arbeits- oder Schneidbereich 60
der Fräskette 10 od. dgl. geringfügig, beispielsweise 1 mm über.
Die beiden anderen messerartigen Führungsglieder 54 und 58 stehen
demgegenüber nach der anderen Seite, also nach unten hin um etwa
denselben Betrag über den Arbeits- oder Schneidbereich über. Demnach gräbt sich also das messerartige Führungsglied 56 leicht in
die obere Schlitzwand 62 ein, während sich die beiden seitlichen
coaxial montierenden Führungsglieder 57 und 58 um etwa den gleichen Betrag in die untere Schlitzwandung 63 eingraben. Man erreicht mit Hilfe dieser drei Führungsglieder in der bereits er-

0090171

läuterten Weise eine zusätzliche gute Längsführung des schwertartigen Werkzeugträgers 14 in Vorschubrichtung 19. Die messerartigen Führungsglieder 56, 57 und 58 sind in der Art eines Schneidrades ausgebildet, dessen Achse 64 bzw. 65, 66, sich senkrecht zur Vorschubrichtung 19 in der Ebene des Werkzeugträgers 14 erstreckt.

Wie bereits erläutert, wird zunächst ein Schlitz der Höhe 61 erstellt. Soll diese Höhe vergrößert werden, so wird der schwertartige Werkzeugträger 14 aus diesem Schlitz herausgezogen und parallel zu sich selbst beispielsweise nach unten in Pfeilrichtung 67 verschoben. Daraufhin erfolgt ein zusätzliches Schneiden oder Fräsen in Richtung des Pfeils 19, wodurch die untere Schlitzwandung 63 um den vorgegebenen Betrag tiefer gelegt wird. Entsprechendes gilt natürlich für eine Schlitzverbreiterung nach oben hin. Um dabei ein Ausweichen des schwertartigen Werkzeugträgers 14 entgegen dem Pfeil 67 zu vermeiden, steckt man den Bolzen 73 eines Abstandshalters 72 z.B. in die Einsteckbohrung 68 ein. Fig. 7 zeigt den Abstandshalter 72 kurz vor dem Einsetzen in Pfeilrichtung 74. Sein freies Ende 75 ist ballig geformt, so daß insgesamt eine etwa pilzartige Form vorliegt. Der Abstandshalter 72 überragt den Arbeits- oder Schneidbereich 60 an seiner der oberen Schlitzwandung 62 entsprechenden Seite um einen vorgegebenen Betrag. Dieser ist identisch mit dem Betrag, um welchen man den Schlitz 61 verbreitert. Soll die Schlitzverbreiterung größer oder kleiner sein, so nimmt man statt dessen einen Abstandshalter 72 mit höherem oder niedrigerem Kopf 76.

Zweckmäßigerweise sind am Kopf bzw. freien Ende des schwertartigen Werkzeugträgers 14 wenigstens noch zwei weitere Einsteckbohrungen 69 und 70 vorgesehen, welche mit der Einsteckbohrung 68 die drei Ecken eines gleichseitigen Dreiecks markieren, das symmetrisch zur Längsachse 53 des Werkzeugträgers liegt, mit nach vorne, d.h. in Vorschubrichtung weisender Spitze. Ein Dreieck geringerer Höhe erreicht man durch die Verwendung mindestens einer weiteren Einsteckbohrung 71, die ebenso wie die Einsteckbohrung 68 auf der Längsmittelachse angeordnet ist. Es ist insbesondere vorgesehen, in die beiden Einsteckbohrungen 69 und 70 sowie eine der Einsteckbohrungen 68 und 71 je einen Abstandshalter einzusetzen.

- 1 -

14 513

A n s p r ü c h e

1.   Vorrichtung zum Einbringen von Schlitzen an Werkstücken
(1), insbesondere an Holz, Holzverbundwerkstoffen u. dgl.,
mittels eines antreibbaren Werkzeugs (10), gekennzeichnet durch
eine am Werkstück (1) befestigbare Halterung (2), an welcher
das Werkzeug (10) ein- und zustellbar angebracht ist.

2.   Vorrichtung nach Anspruch 1, dadurch gekennzeichnet, daß
die Halterung (2) in der Art einer Schraubzwinge ausgebildet
und das Werkzeug (10) mit seinem Antrieb (12, 13, 15) zumindest
längsverschiebbar daran gelagert ist.

3.   Vorrichtung nach Anspruch 2, dadurch gekennzeichnet, daß
das Werkzeug (10) gegenüber der Halterung (2) quer zur Längsführung (20) höheneinstellbar ist.

4.   Vorrichtung nach Anspruch 2, dadurch gekennzeichnet, daß
zur längsverschiebbaren Lagerung der Motor-Werkzeug-Einheit an
letzterer wenigstens eine, vorzugsweise aber zwei seitlich versetzte Führungsstangen (21, 22) befestigt sind, die mit je einer Führungsbuchse (32, 33) zusammen eine Längsführungsvorrichtung bilden.

5.     Vorrichtung nach Anspruch 4, dadurch gekennzeichnet, daß jede Führungsstange (21, 22) in einer vorzugsweise doppelten Kugelführung gelagert ist.

6.     Vorrichtung nach Anspruch 4 oder 5, dadurch gekennzeichnet, daß die Zahl der Aufnahmebohrungen (22, 23; 24, 25) der Halterung (2) für die Führungsbuchsen (32, 33) größer ist als die Zahl der Führungsstangen (21, 22), sie insbesondere doppelt so groß ist.

7.     Vorrichtung nach Anspruch 6, dadurch gekennzeichnet, daß das Werkzeug (10) als Fräskette od. dgl. ausgebildet und um einen schwertartigen Werkzeugträger (14) geführt ist, wobei das freie Ende des Werkzeugträgers mit dem Werkzeug geringfügig breiter (29) ist als der seitliche Abstand (28) zweier benachbarter Aufnahmebohrungen (24, 25) zweier Aufnahmebohrungenpaare, jedoch wesentlich kleiner als der Seitenabstand der beiden Aufnahmebohrungen (25, 26) ein und desselben Aufnahmebohrungenpaares.

8.     Vorrichtung nach wenigstens einem der Ansprüche 4 bis 7, dadurch gekennzeichnet, daß die beiden Führungsbuchsen (32, 33) durch einen Querträger (34) verbunden sind und an diesem der Werkzeugträger (14) verschiebbar abgestützt ist.

9.    Vorrichtung nach Anspruch 8, gekennzeichnet durch eine Abstützung des Werkzeugträgers (14) am Querträger (34) mittels einer Kulissenführung (35), wobei sich in Längsrichtung des Werkzeugträgers (14) ein Kulissenschlitz (36) erstreckt und der Kulissenstein (37) od. dgl. den Kulissenschlitz (36) senkrecht zu dessen Längsachse durchsetzt und mit seitlichen Ansätzen (39) beidseits untergreift.

10.    Vorrichtung nach Anspruch 9, dadurch gekennzeichnet, daß der Kulissenstein (37) od. dgl. an einem bolzenartigen Stützglied (38) gehalten oder angeformt ist, das eine Klemmführung (40) des Querträgers (34) verschieb- und feststellbar durchsetzt.

11.    Vorrichtung nach Anspruch 10, dadurch gekennzeichnet, daß die Motor-Werkzeug-Einheit (27) an einer Querführung (43) verschieb- und feststellbar gehalten ist, die sich parallel zur Klemmführung (40) des Querträgers (34) erstreckt und an der die von der Halterung (2) abgewandten Enden der Führungsstangen (21, 22) befestigt sind.

12.    Vorrichtung nach Anspruch 11, gekennzeichnet durch wenigstens ein einstellbares Anschlagelement (49) an der Querführung (43) für die Motor-Werkzeug-Einheit (27).

0090171

13. Vorrichtung nach wenigstens einem der vorhergehenden Ansprüche, mit einer am Werkstück befestigbaren Halterung, an welcher das Werkzeug ein- und zustellbar angebracht ist, dadurch gekennzeichnet, daß an einer Halterung, einem Träger oder einer
Führung für das Werkzeug, insbesondere am schwertartigen Werkzeugträger (14) für das als Fräskette od. dgl. ausgebildetes
Werkzeug (10), wenigstens ein, den Schneid- oder Zerspannungsbereich des Werkzeugs nach einer Seite hin quer überragender Abstandshalter (72) abnehmbar angebracht ist.

14. Vorrichtung nach Anspruch 13, dadurch gekennzeichnet, daß
jeder Abstandshalter (72) steckbar mit dem Werkzeugträger (14)
verbunden ist und der Werkzeugträger zumindest zwei wahlweise
benutzbare Einsteckbohrungen (68 bis 71) für einen Einsteckbolzen
(73) des Abstandshalters (72) aufweist.

15. Vorrichtung nach Anspruch 14, dadurch gekennzeichnet, daß
die Ein-steckbohrungen (69, 71) für den oder die Abstandshalter
(72) in Längsrichtung des schwertartigen Werkzeugträgers (14)
versetzt angeordnet sind, sich insbesondere etwa auf dessen
Längsmittelachse (53) befinden.

16. Vorrichtung nach Anspruch 14 oder 15, gekennzeichnet durch
mindestens drei, die Ecken eines Dreiecks markierende Einsteckbohrungen (68 bis 71), für den oder die Abstandshalter (72).

17.    Vorrichtung nach wenigstens einem der Ansprüche 14 bis 16,
dadurch gekennzeichnet, daß der Abstandshalter (72) eine pilzförmige Gestalt besitzt.

18.    Vorrichtung nach wenigstens einem der vorhergehenden Ansprüche, mit einem schwertartigen Werkzeugträger für eine Fräskette od. dgl., dadurch gekennzeichnet, daß die vordere Querkante
(51) des Werkzeugträgers (14) geneigt zur Längsachse (53) des
letzteren verläuft, sie damit insbesondere einen Winkel von ca.
60° bis 80° einschließt.

19.    Vorrichtung nach wenigstens einem der vorhergehenden Ansprüche, mit einem schwertartigen Werkzeugträger für eine Fräskette od. dgl., dadurch gekennzeichnet, daß im Bereich des freien
Endes des Werkzeugträgers (14) wenigstens ein quer abstehendes,
sich in dessen Verschieberichtung (19) erstreckendes, messerartiges Führungsglied (56, 57, 58) angebracht ist.

20.    Vorrichtung Anspruch 19, gekennzeichnet durch mindestens
je ein nach entgegengesetzten Seiten quer abstehendes, messerartiges Führungsglied (56, 57, 58) des Werkzeugträgers (14).

21.    Vorrichtung Anspruch 20, gekennzeichnet durch ein mittiges, nach der einen Seite abstehendes (56) und zwei dazu in Verschieberichtung (19) des Werkzeugträgers (14) versetzte, beidseits der Längsmittelachse (53) angeordnete, nach der anderen
Seite abstehende, messerartige Führungsglieder (57, 58).

0090171

22.    Vorrichtung nach wenigstens einem der Ansprüche 19 bis 21, dadurch gekennzeichnet, daß jedes messerartige Führungsglied (56, 57, 58) in der Art eines Schneidrades ausgebildet ist, dessen Achse (64) sich senkrecht zur Vorschubrichtung (19) des Werkzeugträgers (14) in dessen Ebene erstreckt.

FIG.1

FIG.2

FIG.3

0090171

FIG.4

FIG.5

0090171

Fig. 7

Fig. 6

Fig. 8